## Europäisches Patentamt

## European Patent Office

## Office européen des brevets

(19)

(11) Numéro de publication: **0 268 514**
**B1**

(12) # FASCICULE DE BREVET EUROPEEN

(45) Date de publication du fascicule du brevet:
**10.10.90**

(51) Int. Cl.⁵: **B60N 2/12**

(21) Numéro de dépôt: **87402383.1**

(22) Date de dépôt: **22.10.87**

(54) Dispositif de réglage de la hauteur et de l'assiette d'un siège, notamment de véhicule.

(30) Priorité: **05.11.86 FR 8615421**

(43) Date de publication de la demande:
**25.05.88 Bulletin 88/21**

(45) Mention de la délivrance du brevet:
**10.10.90 Bulletin 90/41**

(84) Etats contractants désignés:
**DE ES GB IT SE**

(56) Documents cités:
**DE-A- 2 429 019**
**DE-A- 2 456 725**
**FR-A- 2 433 433**
**FR-A- 2 484 807**

(73) Titulaire: **ROCKWELL-CIM, 6, rue Barbès Boite Postale 70, F-92302 Levallois Cedex(FR)**

(72) Inventeur: **Periou, Pierre, 15, les Boccages Bruns, F-95000 Cergy Pontoise(FR)**

(74) Mandataire: **Martin, Jean-Paul et al, c/o CABINET LAVOIX 2, Place d'Estienne d'Orves, F-75441 Paris Cedex 09(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un dispositif de réglage de la hauteur et de l'assiette d'un siège, notamment de véhicule, du type comportant des glissières déplaçables longitudinalement sur le plancher du véhicule, une assise supportant un coussin et un dossier, et des moyens pour régler l'assise en hauteur et en assiette.

On connait un dispositif de rehausse permettant le réglage indépendant de la hauteur et de l'assiette de l'assise au moyen de deux systèmes motorisés agissant respectivement sur l'avant et sur l'arrière du siège. Or, l'arrière supportant l'essentiel du poids du passager est donc plus chargé que l'avant du siège, de sorte que lorsque les deux moteurs électriques sont actionnés simultanément, l'arrière monte moins haut que l'avant. De ce fait, une deuxième manoeuvre est nécessaire pour corriger l'inclinaison du siège, par commande du moteur associé à l'arrière du siège.

Ainsi, la manoeuvre de ce type de rehausse est peu commode puisque c'est seulement par approximations successives qu'il est possible de régler séparément la hauteur et l'inclinaison, ou assiette, de l'assise. En outre, un tel mécanisme de réglage ne permet de faire basculer l'assise qu'autour d'axes transversaux passant par son bord avant ou son bord arrière. Or, pour assurer un confort accru aux passagers, il est souhaitable, non seulement de pouvoir régler la hauteur du siège à la valeur voulue, mais de lui donner un angle d'assiette par rotation de l'assise autour d'un axe horizontal transversal passant par un point déterminé du corps du passager.

Ce dispositif de réglage connu ne permet donc pas de conférer à l'assiette un tel mouvement de basculement autour de cet axe.

On connait également un système de rehausse essentiellement constitué par des mécanismes de biellettes permettant, d'une part le réglage de la hauteur de l'assise, et d'autre part celui de son assiette par deux mouvements indépendants de basculement de l'avant et de l'arrière de ladite assise. Cette seconde réalisation s'approche davantage que la précédente de la trajectoire d'assiette recherchée, définie ci-dessus. Néanmoins, les trajectoires obtenues ne correspondent pas à la trajectoire effectivement recherchée, en raison du fait qu'elles sont liées à la rotation de biellettes. De plus, ces mécanismes sont encombrants, fragiles et de fabrication sophistiquée, donc difficile.

L'invention a pour but de réaliser un dispositif de réglage du type à deux mouvements de rehausse et d'assiette indépendants permettant d'obtenir une trajectoire d'assiette correspondant exactement à celle recherchée, qui soit d'un encombrement réduit par rapport aux dispositifs antérieurs, de fabrication plus simple, donc moins onéreuse, et qui supprime quasi-complètement toute élasticité du mécanisme par génération de jeux ou de vibrations.

Suivant l'invention, les moyens pour régler l'assise en hauteur et en assiette comprennent, sur chaque côté du siège, une came interposée entre la glissière et l'assise et sur laquelle sont ménagées:

- des pistes d'appui de la came sur la glissière pour le réglage en hauteur de la came et de l'assise;
- et des pistes d'appui de l'assise sur la came, profilées en fonction du mouvement d'assiette désiré pour l'assise par rapport à la came;
- ce dispositif comprenant des moyens de commande, d'une part de la hauteur de la came et de l'assise par rapport à la glissière, et d'autre part de l'assiette de l'assise par rapport à la came.

Suivant un mode de réalisation préféré, la came est formée par une plaque dans laquelle sont ménagées au moins deux lumières allongées et inclinées, dont les bords supérieurs constituent les pistes d'appui de la came sur des organes de roulement ou de glissement montés sur des supports solidaires de la glissière.

Suivant une autre particularité de l'invention, les pistes d'appui de l'assise sur la came sont constituées par les bords inférieurs d'au moins deux lumières allongées inclinées, réalisées dans la came et profilées en corrélation avec le mouvement d'assiette recherché, de préférence un basculement de l'assise autour d'un axe transversal horizontal traversant à une hauteur déterminée l'emplacement réservé au passager, l'assise étant équipé d'organes de roulement ou de glissement qui coopèrent avec lesdites pistes d'appui de l'assise sur la came.

Les lumières permettant le réglage en hauteur de la came et de l'assise sont normalement rectilignes et inclinées sur un plan horizontal, tandis que les lumières formées dans la came pour permettre le mouvement d'assiette de l'assise ont une géométrie directement fonction du mouvement d'inclinaison recherché pour l'assise, ce qui permet effectivement d'obtenir la trajectoire exacte recherchée pour le mouvement d'assiette.

Enfin, chacune des deux cames de ce dispositif peut être constituée par une pièce métallique moulée ou découpée, ou par une pièce en matière plastique moulée et armée d'un treillis métallique ou par un treillis métallique mécano-soudé, dont la fabrication est relativement simple et peu onéreuse.

D'autres particularités et avantages de l'invention apparaitront au cours de la description qui va suivre, faite en référence aux dessins annexés qui en illustrent deux modes de réalisation à titre d'exemples non limitatifs:

- la Figure 1 est une vue en élévation latérale schématique d'un siège de véhicule automobile équipé d'un dispositif selon l'invention pour le réglage de la hauteur et de l'assiette du siège;
- la Figure 2 est une vue en élévation d'un premier mode de réalisation de la came du dispositif de réglage selon l'invention;
- la Figure 3 est une vue en coupe verticale suivant 3-3 de la Figure 2;
- la Figure 4 est une vue en élévation de la came de la Figure 2 à échelle réduite, montée sur une glissière du siège et équipée d'un vérin de commande du réglage en hauteur, la came étant en position basse;
- la Figure 5 est une vue analogue à la Figure 4 montrant la came en position haute;
- la Figure 6 est une vue en élévation de la came, de la glissière et de l'assise ainsi que d'un vérin de commande de l'assiette de l'assise par rapport à la came (le vérin de commande de la hauteur de la came n'ayant pas été représenté pour ne pas surcharger le dessin), l'assise étant représentée en position inclinée vers l'arrière;

- la Figure 7 est une vue analogue à la Figure 6 montrant l'assise inclinée vers l'avant du véhicule;

- la Figure 8 est une vue en coupe verticale suivant 8-8 de la Figure 4;

- la Figure 9 est une vue en élévation longitudinale avec arrachements d'un second mode de réalisation de la came et de la glissière associée, la came étant en position basse;

- la Figure 10 est une vue en coupe suivant 10-10 de la Figure 9;

- la Figure 11 est une vue analogue à la Figure 9 complétée par un vérin de commande de la came et montrant celle-ci en position haute;

- la Figure 12 est une vue en coupe suivant 12-12 de la Figure 11.

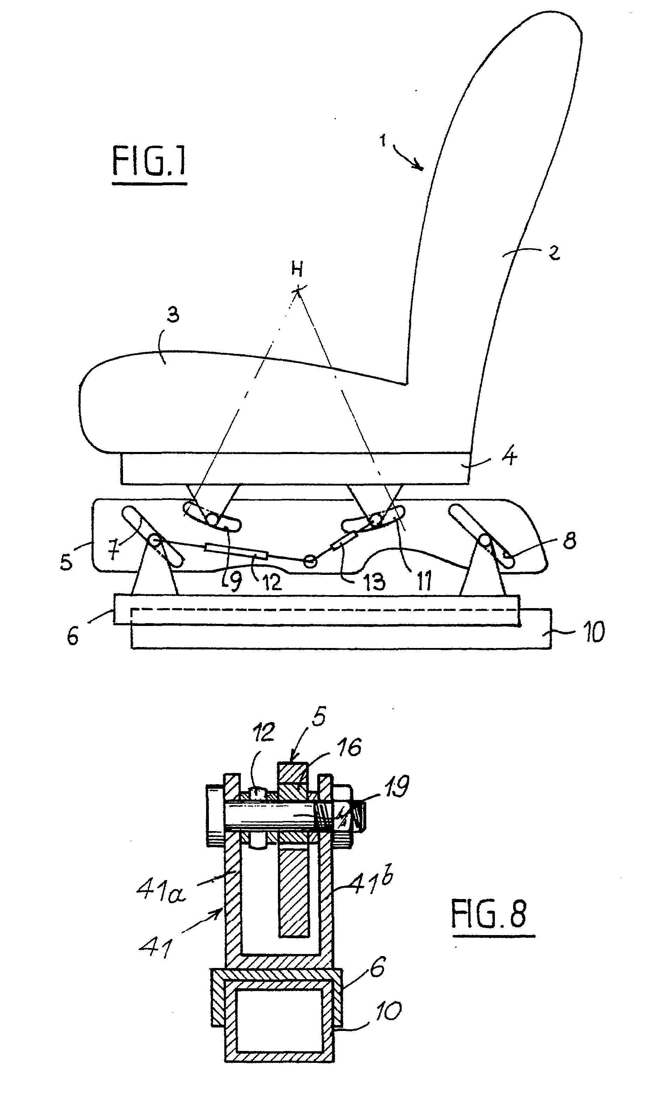

On voit à la Figure 1 un siège 1 de véhicule automobile, comportant un dossier 2 et un coussin 3, qui repose sur une assise 4 montée en appui sur une came complexe 5, elle-même supportée par une glissière mobile 6 formant embase et pouvant coulisser longitudinalement sur une glissière fixe 10 solidaire du plancher du véhicule.

Le montage du siège proprement dit 2, 3 sur l'assise 4 et celui de la glissière 6 sont connus en soi et ne nécessitent pas de description particulière.

L'ensemble du mécanisme comprend deux cames 5 et deux glissières 6 similaires, placées de chaque côté du siège 1, et solidarisées ensemble par la structure supérieure du siège (assise 4) et le cas échéant en outre, par des barres transversales non représentées.

La came 5 est constituée par une tôle métallique moulée ou découpée, ou par une tôle moulée en matière plastique et armée d'un treillis métallique mécano-soudé ou par un treillis métallique mécano-soudé. Sur chaque came 5 sont ménagées, d'une part des pistes 7, 8 d'appui de la came 5 sur la glissière 6 pour le réglage en hauteur de la came 5 et de l'assise 4, et d'autre part des pistes 9, 11 d'appui de l'assise 4 sur la came 5, profilées en fonction du mouvement d'assiette désiré pour l'assise 4 par rapport à la came 5.

Le dispositif comprend en outre des moyens de commande, d'une part de la hauteur de la came 5 et de l'assise 4 par rapport à la glissière 6, et d'autre part de l'assiette de l'assise 4 par rapport à la came 5. Dans l'exemple décrit, ces moyens sont constitués. pour le réglage de la hauteur de la came 5, par un vérin 12 ancré d'une part sur la glissière 6 et d'autre part sur la came 5, et, pour le réglage de l'inclinaison d'assiette de l'assise 4, par un vérin 13 ancré sur la came 5 et sur l'assise 4.

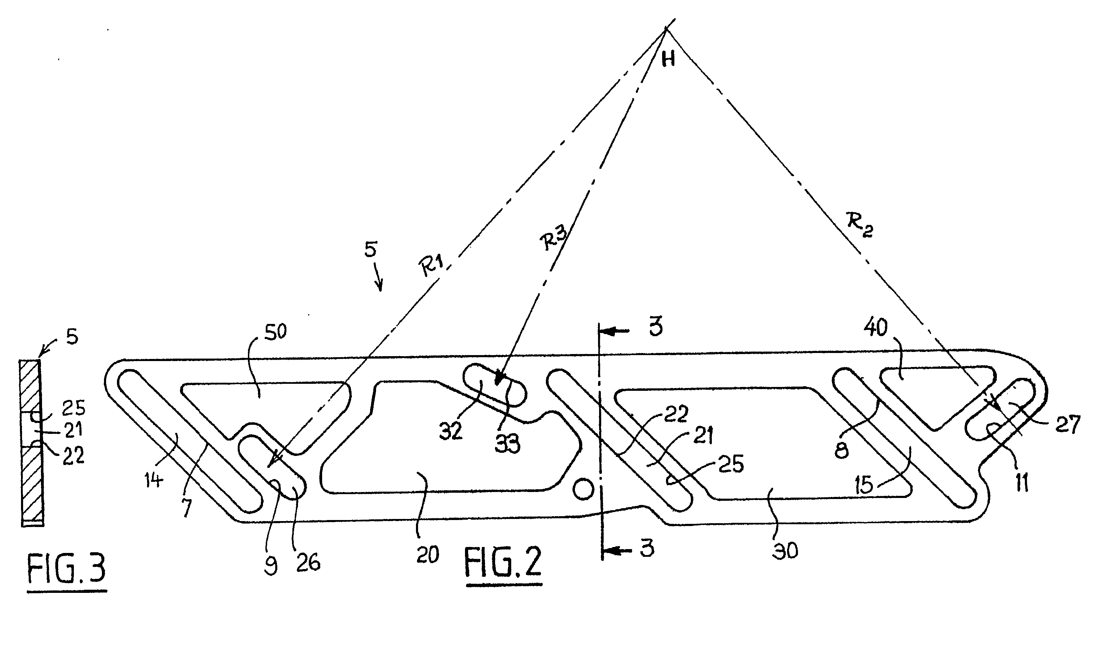

On décrira maintenant plus en détail la came 5 en référence à la Figure 2.

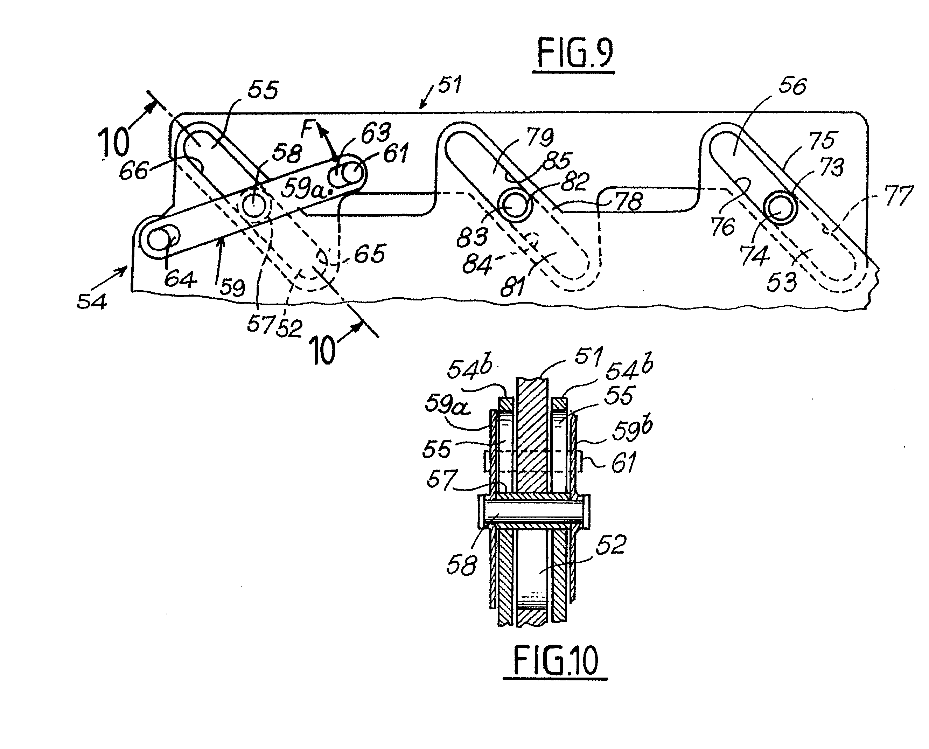

Dans la came 5 sont ménagés plusieurs ajours 20, 30, 40, 50 et, au voisinage des extrémités avant et arrière, au moins deux lumières allongées rectilignes 14, 15, inclinées sur l'horizontale avec la même inclinaison. Les bords supérieurs respectifs 7, 8 des lumières 14, 15 constituent les pistes d'appui de la came 5 sur des galets 16, 17 de roulement montés sur des supports constitués par des chapes 41, 18 fixées à la glissière 6. Chaque galet ou rouleau 16, 17 est monté sur un axe 19 (Figure 8) traversant deux joues 41 a, 41 b de la chape 41. La came 5 et le vérin 12 sont placés entre les joues 41a, 41b.

L'appui de la came 5 sur les galets 16, 17 se fait donc par les bords supérieurs 7, 8 constituant les pistes de réglage en hauteur de la came 5.

D'autre part, dans la came 5 est ménagée, entre les lumières 14 et 15, de préférence dans la zone centrale de la came, une seconde lumière allongée rectiligne 21, similaire aux lumières 14, 15 et de même inclinaison, dont le bord inférieur 22 constitue une contre-piste de réglage de la hauteur de la came 5. En effet, sur cette contre-piste 22 vient prendre appui un galet 23 de roulement, monté de manière similaire aux galets 16, 17 dans une chape 24 fixée à la glissière 6 entre les chapes 17 et 18.

Le montage du galet 23 est exécuté de telle sorte que celui-ci soit en appui, non pas sur le bord supérieur 25 de la lumière 21, mais sur son bord inférieur 22 formant la contre-piste. Ceci peut être obtenu par un positionnement relatif approprié du galet 23 et de la contre-piste 22, ou par des moyens élastiques (non représentés) agencés pour exercer sur la came 5 une force de rappel dirigée vers le haut et maintenir cette came en appui par la contre-piste 22 sur le galet 23.

Ce montage permet de supprimer les jeux ou vibrations éventuels de la came 5 par rapport à la glissière 6 qui pourraient survenir du fait qu' il existe nécessairement un jeu (visible à la Figure 8) entre les galets de roulement 16, 17 et les bords inférieurs des lumières 14, 15.

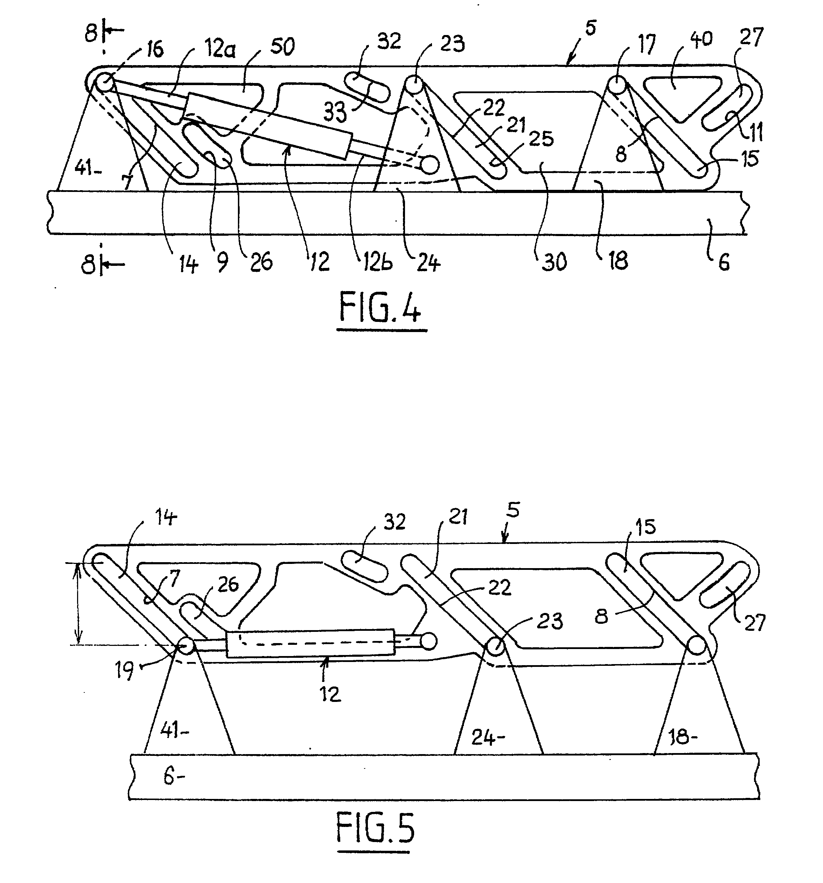

Le vérin 12 est à double effet et ses deux tiges 12 a, 12 b sont respectivement articulées sur l'axe 19 du galet 16 et sur un point de la partie inférieure de la came 5, la tige 12b étant interposée entre les deux joues de la chape 24. Par ailleurs, la came 5 est également située entre les joues de la troisième chape 18. A partir de la position basse de la came 5 (Figure 4), le vérin 12 travaille en traction pour amener la came 5 en position haute (Figure 5), par roulement des deux galets 16, 17 sur les pistes 7, 8 et du galet central 23 sur la contre-piste 22, les tiges 12 a, 12 b étant rétractées.

Suivant une autre particularité de l'invention, les pistes 9, 11 d'appui de l'assise 4 sur la came 5 sont constituées par les bords inférieurs d'au moins deux lumières allongées et inclinées 26, 27, réalisées dans la came 5, de préférence au voisinage des extrémités de celles-ci. Les lumières 26, 27 sont profilées en corrélation avec le mouvement d'assiette recherché, de préférence comme indiqué ci-dessus, un basculement de l'assise 4 autour d'un axe transversal horizontal passant par un point H situé à une hauteur déterminée dans l'emplacement réservé au passager. Dans ce cas, les lumières 26, 27, donc les pistes d'appui 9, 11 sont incurvées et présentent des rayons de courbure respectifs R1, R2 de basculement de l'assise 4 autour de l'axe passant par H.

L'assise 4 est équipée de deux chapes avant 28 et arrière 29 portant à leurs extrémités inférieures des galets de roulement 31, qui prennent appui sur les pistes 9 et 11.

Par ailleurs, dans la came 5 est formée une troisième lumière allongée 32 présentant une courbure correspondant à un rayon R3 de basculement autour de H, et dont le bord supérieur 33 constitue une contre-piste sur laquelle est maintenu en appui un galet 34 de roulement porté par une chape 35 solidaire de l'assise 4. L'appui du galet 34 sur la contre-piste 33 est obtenu de la même manière que l'appui du galet 23 sur la contre-piste 22 et dans le même but, afin de supprimer tout jeu ou vibration éventuel entre l'assise 4 et la came 5.

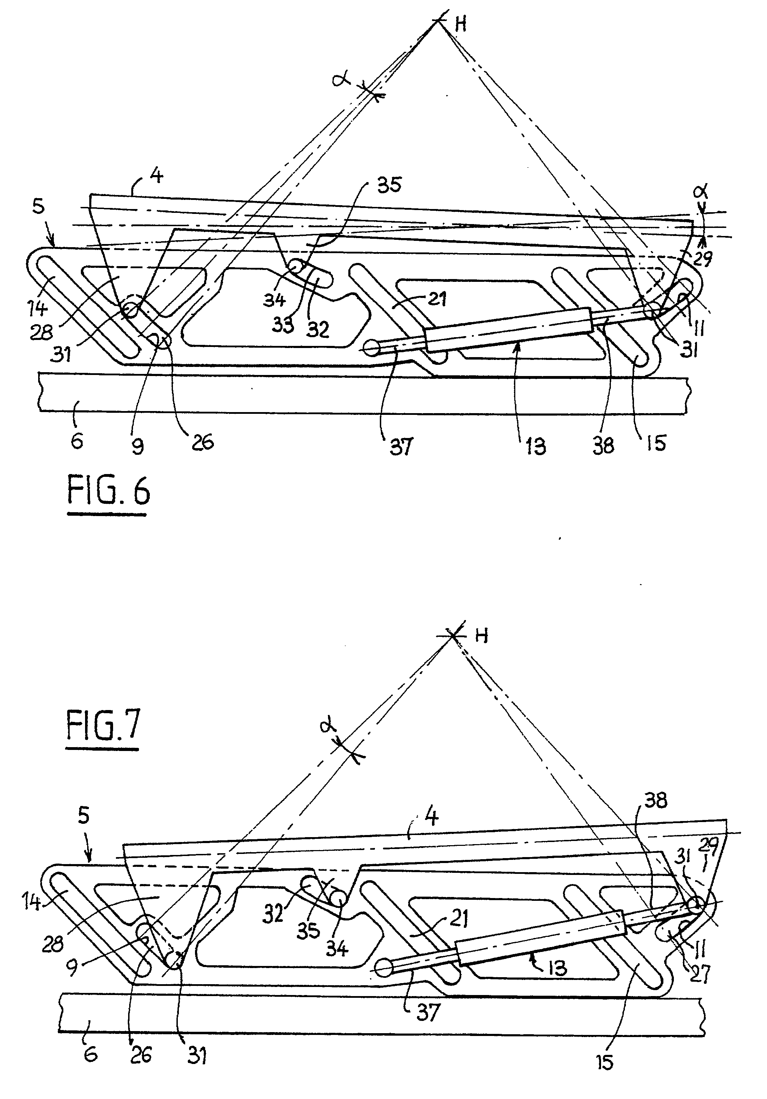

Enfin, la commande de l'inclinaison d'assiette de l'assise 4 peut être obtenue, dans l'exemple décrit, par un vérin 13 à double effet, dont une première tige 37 est ancrée sur la came 5 et dont la deuxième tige 38 est articulée sur l'assise 4, de préférence sur l'axe d'un des galets 31, à savoir le galet 31 arrière dans l'exemple décrit (Figures 6-7). De son côté, la tige 37 peut être articulée sur le même axe que la tige 12b du vérin 12, ce qui simplifie le montage des vérins. La came 5 est disposée entre les joues des chapes 28, 29 de même que la tige 38.

L'actionnement de chaque vérin 13 associé à une came 5 permet de faire suivre à l'assise 4 un mouvement d'inclinaison déterminé par les rayons de courbure R1, R2, R3 des pistes 9, 11 et de la contre-piste 33, d'une amplitude angulaire $\alpha$ entre la position de basculement maximum vers l'arrière (figure 6) et la position de basculement maximum vers l'avant (figure 7).

Le second mode de réalisation de l'invention, illustré aux Figures 9 à 12, a pour avantage essentiel de réduire l'encombrement du dispositif de réglage par rapport à la réalisation précédente.

En effet, la came 51 comporte ici deux lumières allongées 52, 53, inclinées d'un même angle sur l'horizontale, formées aux deux extrémités de la came, et la glissière 54 présente également deux lumières 55, 56 allongées et inclinées comme les lumières 52, 53 et formées en vis-à-vis de celle-ci, les bords supérieurs et inférieurs de ces différentes lumières étant rectilignes et situés dans les plans parallèles.

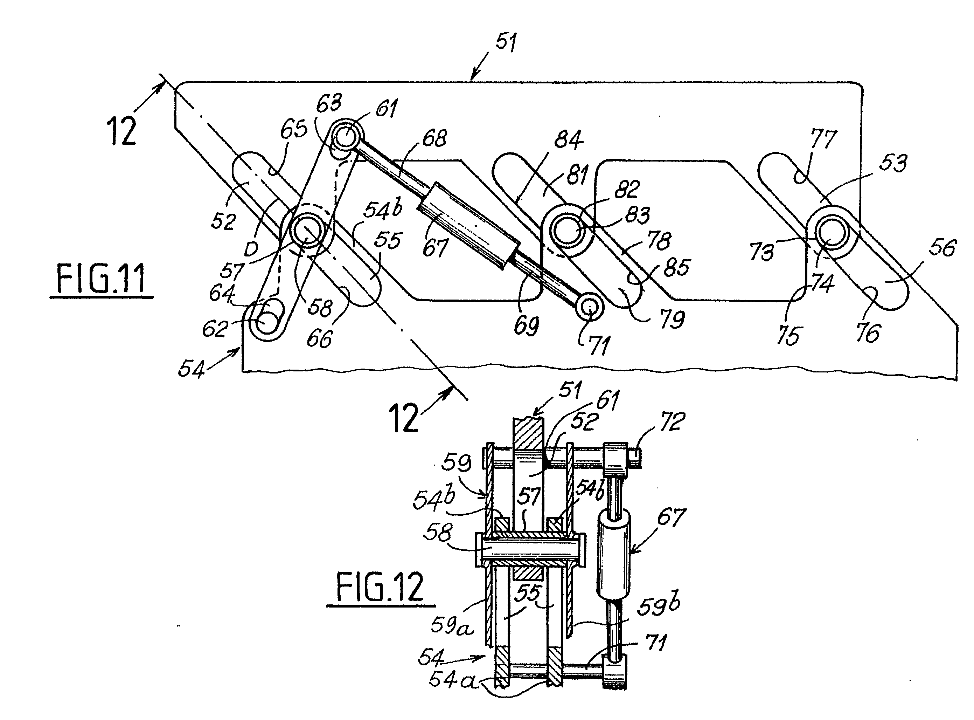

Les deux lumières 52, 55 sont traversées par un galet 57 monté rotatif sur un axe transversal 58, traversant également les deux lumières 52, 55. Une biellette double 59, comportant deux éléments parallèles 59a, 59b disposés de chaque côté de la came 51 et de la glissière 54, est articulée sur l'extrémité de l'axe 58 qui traverse lesdits éléments 59a, 59b (Figure 12), de manière à pouvoir basculer autour de l'axe 58.

Les deux extrémités des éléments 59a, 59b sont reliées par des doigts transversaux 61, 62 pouvant coulisser perpendiculairement à l'axe 58, en restant parallèles à ce dernier, dans des ouvertures 63, 64 agencées dans les extrémités des éléments 59a, 59b et dans des ouvertures correspondantes ménagées dans la came 51 et dans la glissière 54. Par ailleurs, le galet 57 peut rouler simultanément sur la came 51 par une piste d'appui 65 formée par le bord supérieur de la lumière 52, et sur la glissière 54 par une piste d'appui 66 formée pa le bord inférieur de la lumière 55. Un vérin 67 à double effet a ses deux tiges 68, 69 articulées respectivement sur la came 51 et sur un axe 71, solidaire de la glissière 54, l'articulation de la tige 68 étant de préférence, comme représenté aux Figures 11 et 12, une extension latérale 72 doigt supérieur 61.

La glissière 54 est constituée de deux plaques parallèles 54a prolongées à leur partie supérieure par une chape formée par deux joues parallèles 54b traversées par l'axe 58 et par le galet 57, la came 51 venant s'interposer entre les deux joues 54b et entre les éléments 59a, 59b de la biellette 59.

A l'extrémité de la came 51 et de la glissière 54 opposée aux lumières 52, 55, un second galet 73 monté rotatif sur un axe 74 traverse, ainsi que celui-ci, les deux joues parallèles 75 d'une chape de la glissière 54, similaire à la chape 54b. L'axe 74 et le galet 73 traversent donc les deux lumières 53, 56, l'axe 74 étant solidarisé avec la came 51. Le montage du galet 73, et son dimensionnement ainsi que celui des lumières 53, 56 sont tels que le galet 73 roule sur une piste 76 d'appui constituée par le bord inférieur de la lumière 56 de la glissière 54, et simultanément sur une seconde piste d'appui 77 constituée par le bord supérieur de la lumière 53 de la came 51. Bien entendu, les pistes rectilignes 76, 77 sont parallèles entre elles et aux pistes correspondantes 66 et 65.

Dans la zone centrale de la glissière 54, celle-ci comporte une troisième chape 78, similaire aux deux chapes 54b et 75, et dans chacune des joues de laquelle est ménagée une lumière 79, semblable aux lumières 55 et 56. De même, une lumière 81 allongée et inclinée, similaire aux lumières 52 et 53, est agencée dans la came 51 en regard de la lumière 79. Un galet 82 est monté rotatif sur un axe 83 solidaire de la came 51, ces deux éléments traversant les deux joues de la chape 78 et la came 51. Le dimensionnement des lumières 79, 81 et le montage du galet 82 sont réalisés de manière que ce dernier roule en appui sur une première contre-piste 84 constituée par le bord inférieur de la lumière 81 de la came 51, et en appui sur une seconde contre-piste 85 constituée par le bord supérieur de la lumière 79 de la glissière 54. Cet agencement a pour but de supprimer pratiquement tout jeu dans la came 51 et la glissière 54, qui apparaîtrait si le dispositif ne comportait que les lumières 52, 55 avec leur galet 57 et les lumières 53, 56 avec leur galet 73.

La Figure 9 montre la came 51 en position basse sur la glissière 54. Dans cette position, les trois galets 57, 73, 82 sont en appui sur les extrémités inférieures arrondies des lumières 55, 56, 79 de la glissière 54, et en appui contre les extrémités supérieures arrondies des lumières 52, 53, 81 de la came 51, les tiges 68, 69, du vérin 67 étant rétractées au maximum.

Lorsqu'on commande le vérin 67, celui-ci fait basculer la biellette 59 autour de son point d'articulation sur la glissière fixe 54 (flèche F, Figure 9). Ce basculement de la biellette 59 entraîne l'axe 58 et le galet 57, qui roule sur ses pistes d'appui 65, 66, de même que le galet 73 sur ses pistes 76, 77 et le galet 82 sur ses contre-pistes d'appui 84, 85. La came 51 est donc relevée progressivement au-dessus de la glissière 54, jusqu'à sa hauteur maximum (Figure 11), position dans laquelle les galets 57, 73, 82 viennent en butée contre les extrémités supérieures arrondies des lumières 55, 56, 79, les tiges 68, 69 du vérin 67 étant sorties au maximum. Au terme du basculement de la biellette 59, la came 51 a donc parcouru une course de rehausse complète, tandis que les galets 57, 73, 82 n'ont parcouru qu'une demi-course en hauteur, grâce à la simultanéité de leur roulement sur les pistes et contre-pistes et de leur déplacement en hauteur. Durant la rotation de la biellette 59, les doigts 61, 62 coulissent dans les ouvertures respectives 63, 64 et dans celles de la came 51 et de la glissière 54, permettant ainsi des variations de distance entre la direction du déplacement D du galet 57 et les doigts 61, 62.

En variante, le nombre des lumières formées respectivement dans la came 51 et dans la glissière 54 pourrait être ramené à un, avec par conséquent un seul galet 57, le galet 73 et les lumières 53, 56 étant supprimés, les lumières ainsi que le galet et la biellette associés étant convenablement positionnés. Le second galet 82 et ses contre-pistes d'appui seraient alors toutefois maintenus.

De même, le vérin 67 pourrait être remplacé par tout autre moyen de commande équivalent, permettant le mouvement de rehausse de la came 51.

En position basse, l'encombrement vertical d'un tel dispositif de réglage correspond à la moitié de la hauteur d'une came telle que celle des Figures 2 à 8.

Le dispositif de réglage de hauteur et d'assiette de l'assise conforme à l'invention est particulièrement adapté à son utilisation sur un siège automobile, dans lequel les espaces disponibles sont extrêmement réduits, et ce grâce à son faible encombrement par rapport à celui des dispositifs connus.

Un autre avantage essentiel de l'invention consiste dans le fait qu'elle permet de désolidariser la trajectoire d'assiette du siège de la cinématique de ce dernier, car on peut en effet obtenir toute trajectoire d'assiette voulue à partir d'une géométrie correspondante des pistes et contre-pistes formées dans la came. De cette manière, on est certain d'obtenir la trajectoire exacte recherchée pour l'assise, et ce au moyen de cames d'une excellenete rigidité et d'un encombrement minimum.

Enfin, le fait de réaliser les cames 5 en tôle pliée, par pièces moulées ou forgées, ou en matière plastique armée de treillis, ou en un treillis mécano-soudé, simplifie considérablement la fabrication du dispositif par rapport à celle des réalisations antérieures. Cela permet également de diminuer notablement les jeux d'origine ainsi que ceux dûs à l'usure, en éliminant de manière quasi-complète les vibrations et imprécisions de fonctionnement susceptibles d'entraîner un inconfort pour l'utilisateur du siège.

Il convient de mentionner notamment les variantes d'exécution suivantes : le nombre de pistes nécessaire à chaque mouvement (rehausse et assiette) peut être réduit à un ou supérieur à deux. De même, au moins une contre-piste est prévue pour chaque mouvement. Les galets ou rouleaux 16, 17, 23, 31 peuvent être remplacés par des patins de glissement, bien que le rendement soit dans ce cas légèrement moins bon en raison du remplacement du roulement par un frottement. De même, les lumières formées dans la came 5 pourraient être remplacées par des rampes ou des nervures saillantes, de préférence venues de matière avec la came, et l'indication de ces lumières ou rampes de guidage peut varier. Les vérins 12, 13, 67 peuvent être remplacés par des engrenages motorisés, associés à des crémaillères mécaniquement liées aux cames 5 et aux glissières 6.

L'invention est applicable à des sièges autres des véhicules.

## Revendications

1 - Dispositif de réglage de la hauteur et de l'assiette d'un siège (1), notamment de véhicule, comportant des glissières (6) déplaçables longitudinalement sur le plancher (10) du véhicule, une assise (4) supportant un coussin (3) et un dossier (2), et des moyens pour régler l'assise (4) en hauteur et en assiette, caractérisé en ce que lesdits moyens comprennent, sur chaque côté du siège, une came (5) interposée entre la glissière (6) et l'assise (4) et sur laquelle sont ménagées :
- au moins une piste (7, 8) d'appui de la came (5) sur la glissière (6) pour le réglage en hauteur de la came (5) et de l'assise (4);
- et au moins une piste (9, 11) d'appui de l'assise (4) sur la came (5), profilée en fonction du mouvement d'asiette désiré pour l'assise (4) par rapport à la came (5);
- ce dispositif comprenant des moyens (12, 13) de commande, d'une part de la hauteur de la came (5) et de l'assise (4) par rapport à la glissière (6), et d'autre part de l'assiette de l'assise (4) par rapport à la came (5).

2 - Dispositif selon la revendication 1, caractérisé en ce que la came (5) est formée par une tôle ou plaque dans laquelle sont ménagées deux lumières allongées et inclinées (14, 15) dont les bords supérieurs (7, 8) constituent les pistes d'appui de la came (5) sur des organes de roulement (16, 17) ou de glissement montés sur des supports (41, 18) solidaires de la glissière (6).

3 - Dispositif selon la revendication 2, caractérisé en ce que la came (5) est pourvue d'au moins une contre-piste (22) en appui contre un organe de roulement (23) ou de glissement monté sur un support (24) solidaire de la glissière (6), cette contre-piste (22) étant réalisée de façon à assurer un déplacement sans jeu de la came (5) sur ses pistes d'appui (7, 8).

4 - Dispositif selon la revendication 3, caractérisé en ce que la contre-piste (22) est le bord inférieur d'une lumière allongée et inclinée (21) similaire aux lumières (14, 15) constituant les pistes (7, 8), et ce bord inférieur est constamment en appui contre l'organe de roulement (23) ou de glissement associé.

5 - Dispositif selon l'une des revendications 1 à 4, caractérisé en ce que les pistes d'appui de l'assise (4) sur la came (5) sont constituées par les bords inférieurs (9, 11) de deux lumières incurvées, allongées et inclinées (26, 27) réalisées dans la came (5) et profilées en corrélation avec le mouvement d'assiette recherché, de préférence un basculement de l'assise autour d'un axe transversal horizontal passant par un point (H) situé à une hauteur déterminée dans l'emplacement réservé au passager, et l'assise est équipée d'organes de roulement (31) ou de glissement qui coopèrent avec lesdites pistes d'appui (9, 11) de l'assise (4) sur la came (5).

6 - Dispositif selon la revendication 5, caractérisé en ce que la came (5) est munie d'une contre-piste (33) d'assiette de l'assise (4), maintenue en appui contre un organe de roulement (34) ou de glissement solidaire de l'assise (4), de manière à supprimer tout jeu de l'assise par rapport à la came dans son mouvement d'assiette.

7 - Dispositif selon la revendication 6, caractérisé en ce que la contre-piste (33) d'assiette de l'assise (4) est le bord supérieur d'une lumière incurvée et allongée (32), ménagée dans la came (5).

8 - Dispositif selon les revendications 2 à 7, caractérisé e ce que les organes de roulement ou de glissement sont respectivement des galets (16, 17, 23) ou des patins, montés dans des chapes (41, 24, 18) fixées à la glissière (6) pour le réglage en hauteur de la came (5) par rapport à la glissière (6), et des galets (31) ou des patins montés sur des chapes (28, 29) fixées à l'assise (4) pour le mouvement d'assiette de cette dernière par rapport à la came (5).

9 - Dispositif selon l'une des revendications 1 à 8, caractérisé en ce que les moyens de commande de la hauteur de la came (5) et de l'assise (4) comprennent, pour chaque came, un vérin (12) articulé d'un e part sur la came et d'autre part sur la glissière, de préférence sur l'axe (19) d'un organe de roulement (16) ou de glissement supporté par la glissière (6), ou des engrenages motorisés et associés à une crémaillère mécaniquement liée à la came (5) et à la glissière (6).

10 - Dispositif selon l'une des revendications 1 à 9, caractérisé en ce que les moyens de commande de l'assiette de l'assise (4) par rapport à la came (5) comprennent, pour chaque came, un vérin (13) articulé d'une part sur la came et d'autre part sur l'assise, de préférence sur l'axe d'un organe de roulement (31) ou de glissement monté sur l'assise, ou des engrenages motorisés et associés à une crémaillère mécaniquement liée à la came et à la glissière.

11 - Dispositif selon les revendications 1 à 3, caractérisé en ce que la came (51) comporte une lumière allongée, inclinée (52) et dans la glissière (54) est ménagée une lumière inclinée allongée (55) en regard de la lumière (52) de la came, et ces deux lumières (52, 55) sont traversées par un galet (57) autour de l'axe (53) duquel est articulée une biellette (59), dont les deux extrémités opposées sont elles-mêmes articulées sur la glissière (54) et sur la came (51), le galet (57) pouvant rouler simultanément sur la came par une piste d'appui (65) formée par le bord supérieur de la lumière (52) de la came (51), et sur la glissière (54) par une piste d'appui (66) formée par le bord inférieur de la lumière (55) de la glissière, la commande de la rotation de la biellette (59) étant assurée par exemple par un vérin (67) ancré d'une part sur la glissière (54) et d'autre part sur l'articulation de la biellette (59) sur la came (51).

12 - Dispositif selon la revendication 11, caractérisé en ce que dans la came (58) et dans la glissière (54) sont formées en regard l'une de l'autre deux lumières allongées et inclinées (81, 79), traversées par un galet (82) rotatif sur un axe (83) solidaire de la came, le montage du galet (82) et le dimensionnement des lumières (81, 79) étant tels que le galet roule en appui sur une première contre-piste (84) constituée par le bord inférieur de la lumière (81) de la came (51), et sur une seconde contre-piste (85) constituée par le bord supérieur de la lumière (79) de la glissière (54).

13 - Dispositif selon l'une des revendications 11 et 12, caractérisé en ce que les extrémités de la biellette (59) sont percées d'ouvertures allongées (63, 64), ainsi que la came (51) et la glissière (54) d'ouvertures correspondantes, traversées par des doigts (61, 62) pouvant coulisser dans ces ouvertures lorsque la biellette (59) bascule autour de l'axe (58) de son galet (57) durant le réglage en hauteur de la came (51) par rapport à la glissière (54).

14 - Dispositif selon l'une des revendications 11 à 13, caractérisé en ce que les lumières (66, 79, 56) de la glissière (54) sont ménagées dans les joues parallèles (54b, 78, 75) de chapes formées sur la partie supérieure de la glissière (54), la came (51) venant s'intercaler entre ces joues et étant traversée, ainsi que ces dernières, par les galets (57, 73, 82) et leurs axes.

15 - Dispositif selon l'une des revendications 1 à 10, caractérisé en ce que la came (5) est une tôle métallique moulée ou découpée, ou une tôle moulée en matière plastique et armée d'un treillis métallique, ou un treillis mécano-soudé.

**Claims**

1. A device for adjusting the height and angle of a seat (1), particularly in a vehicle, incorporating runners (6) movable longitudinally on the floor (10) of the vehicle, a base (4) supporting a squab (3) and a back (2), and means for adjusting the base (4) in height and angle, characterised in that the said means comprise, on each side of the seat, a cam plate (5) interposed between the runner (6) and the base (4) and on which are provided:
   — at least one track (7, 8) by which the cam plate (5) bears on the runner (6) for the adjustment in height of the cam plate (5) and base (4);
   — and at least one track (9, 11) by which the base (4) bears on the cam plate (5), shaped according to the angular movement desired for the base (4) with respect to the cam plate (5);
   — this device comprising means (12, 13) for controlling, on the one hand the height of the cam plate (5) and base (4) with respect to the runner (6), and on the other hand the angle of the base (4) with respect to the cam plate (5).

2. A device according to claim 1, characterised in that the cam plate (5) is formed from a metal sheet or plate in which two elongate sloping slots (14, 15) are provided, the upper edges (7, 8) of which constitute the tracks by which the cam plate (5) bears on the rolling (16, 17) or sliding members mounted on supports (41, 18) secured to the runner (6).

3. A device according to claim 2, characterised in that the cam plate (5) is provided with at least one countertrack (22) abutting against a rolling (23) or sliding member mounted on a support (24) secured to the runner (6), this countertrack (22) being constructed so as to ensure movement of the cam plate (5) on its bearing tracks (7, 8) without any play.

4. A device according to claim 3, characterised in that the countertrack (22) is the lower edge of an elongate sloping slot (21) similar to the slots (14, 15) constituting the tracks (7, 8), and this lower edge is continuously in abutment against the associated rolling (23) or sliding member.

5. A device according to one of claims 1 to 4, characterised in that the tracks by which the base (4) bears on the cam plate (5) are formed by the lower edges (9, 11) of two curved elongate sloping slots (26, 27) produced in the cam plate (5) and shaped to correspond to the angular movement sought for, preferably a rocking of the base about a horizontal transverse axis passing through a point (H) situated at a specified height in the space occupied by the passenger, and the base is fitted with rolling (31) or sliding members which interact with the said tracks (9, 11) by which the base (4) bears on the cam plate (5).

6. A device according to claim 5, characterised in that the cam plate (5) is provided with a countertrack (33) for the angle of the base (4), held in abutment against a rolling (34) or sliding member secured to the base (4), so as to eliminate any play of the base with respect to the cam plate in its angular movement.

7. A device according to claim 5, characterised in that the countertrack (33) for the angle of the base (4) is the upper edge of a curved elongate slot (32), provided in the cam plate (5).

8. A device according to claims 2 to 7, characterised in that the rolling or sliding members are respectively rollers (16, 17, 23) or blocks, mounted in forks (41, 24, 18) fixed to the runner (6) for adjusting the cam plate (5) in height with respect to the runner (6), and rollers (31) or blocks mounted on forks (28, 29) fixed to the base (4) for the ang-ular movement of the latter with respect to the cam plate (5).

9. A device according to one of claims 1 to 8, characterised in that the means for controlling the height of the cam plate (5) and the base (4) comprise, for each cam plate, a jack (12) articulated on the one hand on the cam plate and on the other hand on the runner, preferably on the spindle (19) of a rolling (16) or sliding member supported by the runner (6), or motorised gears associated with a rack mechanically connected to the cam plate (5) and runner (6).

10. A device according to one of claims 1 to 9, characterised in that the means for controlling the angle of the base (4) with respect to the cam plate (5) comprise, for each cam plate, a jack (13) articulated on the one hand on the cam plate and on the other hand on the base, preferably on the spindle of a rolling (31) or sliding member mounted on the base, or motorised gears associated with a rack mechanically connected to the cam plate and runner.

11. A device according to claims 1 to 3, characterised in that the cam plate (51) incorporates an elongate sloping slot (52), and in the runner (54) an elongate sloping slot (55) is provided opposite the slot (52) in the cam plate, and these 2 slots (52, 55) have a roller (57) passing through them, about the spindle (53) of which a rocker bar (59) is articulated, the two opposite ends of which are themselves articulated on the runner (54) and on the cam plate (51), the roller (57) being able to roll simultaneously on the cam plate by means of a bearing track (65) formed by the upper edge of the slot (52) in the cam plate (51), and on the runner (54) by means of a bearing track (66) formed by the lower edge of the slot (55) in the runner, control of the rotation of the rocker bar (59) being provided for example by a jack (67) anchored on the one hand on the runner (54) and on the other hand on the articulation of the rocker bar (59) on the cam plate (51).

12. A device according to claim 11, characterised in that in the cam plate (58) and runner (54), two elongate sloping slots (81, 79) are formed opposite one another, with a roller (82) passing through them, rotating on a spindle (83) secured to the cam plate, the mounting of the roller (82) and the sizing of the slots (81, 79) being such that the roller rolls whilst bearing against a first countertrack (84) formed by the lower edge of the slot (81) in the cam plate (51), and against a second countertrack (85) formed by the upper edge of the slot (79) in the runner (54).

13. A device according to one of claims 11 and 12, characterised in that the ends of the rocker bar (59) have elongate openings (63, 64) made in them, whilst the cam plate (51) and runner (54) have corresponding openings, with pins (61, 62) passing through them which can slide in these openings when the rocker bar (59) rotates about the spindle (58) of its roller (57) during the adjustment of the height of the cam plate (51) with respect to the runner (54).

14. A device according to one of claims 11 to 13, characterised in that the slots (66, 79, 56) in the runner (54) are produced in the parallel cheeks (54b, 78, 75) of forks formed on the upper part of the runner (54), the cam plate (51) being interposed between these cheeks and, as is the case with the latter, having rollers (57, 73, 82) and their spindles passing through it.

15. A device according to one of claims 1 to 10, characterised in that the cam plate (5) is a cast or stamped metal plate, or a plate moulded from plastic material and reinforced with a metal lattice, or a mechanical-welded lattice.

**Patentansprüche**

1. Vorrichtung zum Einstellen der Höhe und der Lage eines Sitzes (1), insbesondere eines Fahrzeugsitzes mit Gleitschienen (6), die auf dem Boden (10) des Fahrzeuges in Längsrichtung verschiebbar sind, einer Grundplatte (4), die ein Sitzpolster (3) und eine Sitzlehne (2) trägt, und Einrichtungen zum Einstellen der Grundplatte (4) in ihrer Höhe und ihrer Lage, dadurch gekennzeichnet, daß diese Einrichtungen auf jeder Seite des Sitzes eine Steuerkurvenplatte (5) zwischen der Gleitschiene (6) und der Grundplatte (4) aufweisen, in der
- wenigstens eine Bahn (7, 8) zum Abstützen der Steuerkurvenplatte (5) auf der Gleitschiene (6), um die Höhe der Steuerkurvenplatte (5) und der Grundplatte (4) einzustellen, und
- wenigstens eine Bahn (9, 11) zum Abstützen der Grundplatte (4) auf der Steuerkurvenplatte (5) ausgespart sind, die in Abhängigkeit von der für die Grundplatte (4) bezüglich der Steuerkurvenplatte (5) gewünschten Lagebewegung profiliert ist, wobei
- die Vorrichtung Steuereinrichtungen (12, 13) einerseits für die Höhe der Steuerkurvenplatte (5) und der Grundplatte (4) bezüglich der Gleitschiene (6) und andererseits für die Lage der Grundplatte (4) bezüglich der Steuerkurvenplatte (5) umfaßt.

2. Vorrichtung nach Anspruch 1, dadurch gekennzeichnet, daß die Steuerkurvenplatte (5) aus einem Blech oder einer dünnen Platte besteht, in der langgestreckte und schräg erlaufende Schlitze (14, 15) ausgespart sind, deren obere Ränder (7, 8) die Bahnen zum Abstützen der Steuerkurvenplatte (5) auf Rollelementen (16, 17) oder Gleitelementen bilden, die an Halterungen (41, 18) angebracht sind, die fest mit der Gleitschiene (6) verbunden sind.

3. Vorrichtung nach Anspruch 2, dadurch gekennzeichnet, daß die Steuerkurvenplatte (5) mit wenigstens einer Gegenbahn (22) zum Abstützen gegen ein Rollelement (23) oder ein Gleitelement versehen ist, das an einer Halterung (24) angebracht ist, die fest mit der Gleitschiene (6) verbunden ist, wobei die Gegenbahn (22) so ausgebildet ist, daß eine Verschiebung der Steuerkurvenplatte (5) ohne Spiel auf den Stützbahnen (7, 8) sichergestellt ist.

4. Vorrichtung nach Anspruch 3, dadurch gekennzeichnet, daß die Gegenbahn (22) der untere Rand eines langgestreckten und schrägverlaufenden Schlitzes (21) ist, der ähnlich wie die Schlitze (14, 15) ausgebildet ist, die die Bahnen (7) und (8) bilden, und der untere Rand dauerhaft gegen das zugehörige Rollelement (23) oder das zugehörige Gleitelement abgestützt ist.

5. Vorrichtung nach einem der Ansprüche 1 bis 4, dadurch gekennzeichnet, daß die Bahnen zum Abstützen der Grundplatte (4) auf der Steuerkurvenplatte (5) von den unteren Rändern (9, 11) zweier gekrümmter langgestreckter und schrägverlaufender Schlitze (26, 27) gebildet sind, die in der Steuerkurvenplatte (5) ausgebildet und in Wechselbeziehung mit der gewünschten Lagebewegung, vorzugsweise einer Kippbewegung der Grundplatte um eine querverlaufende horizontale Achse profiliert sind, die durch einen Punkt (H) geht, der sich auf einer bestimmten Höhe an der für den Insassen reservierten Stelle befindet und daß die Grundplatte mit Rollelementen (31) oder Gleitelementen versehen ist, die mit diesen Bahnen (9, 11) zum Abstützen der Grundßlatte (4) auf der Steuerkurvenplatte (5) zusammenarbeiten.

6. Vorrichtung nach Anspruch 5, dadurch gekennzeichnet, daß die Steuerkurvenplatte (5) mit einer Gegenbahn (33) für die Lage der Grundplatte (4) versehen ist, die an einem Rollelement (34) oder einem Gleitelement abgestützt gehalten ist, das fest mit der Grundplatte (4) verbunden ist, derart, daß jedes Spiel der Grundplatte bezüglich der Steuerkurvenplatte bei seiner Lagebewegung unterdrückt ist.

7. Vorrichtung nach Anspruch 6, dadurch gekennzeichnet, daß die Gegenbahn (33) für die Lage der Grundplatte (4) der obere Rand eines gekrümmten und langgestreckten Schlitzes (32) ist, der in der Steuerkurvenplatte (5) ausgespart ist.

8. Vorrichtung nach den Ansprüchen 2 bis 7, dadurch gekennzeichnet, daß die Rollelemente oder die Gleitelemente jeweils Rollen (16, 17, 23) oder Gleitschuhe, die in Gabeln (41, 24, 18), die an der Gleitschiene (6) angebracht sind, um die Höhe der Steuerkurvenplatte (5) bezüglich der Gleitschiene (6) einzustellen, und Rollen (31) oder Gleitschuhe sind, die in Gabeln (28, 29) angebracht sind, die an der Grundplatte (4) für die Lagebewegung der letzteren bezüglich der Steuerkurvenplatte (5) befestigt sind.

9. Vorrichtung nach einem der Ansprüche 1 bis 8, dadurch gekennzeichnet, daß die Steuereinrichtungen für die Höhe der Steuerkurvenplatte (5) und der Grundplatte (4) für jede Steuerkurvenplatte einen Zylinder (12), der einerseits an der Steuerkurvenplatte und andererseits an der Gleitschiene, vorzugsweise auf der Achse (19) eines Rollelementes (16) oder eines Gleitelementes angelenkt ist, das von der Schiene (6) getragen wird, oder ein von einem Motor angetriebenes Rädergetriebe mit einer zugehörigen mechanischen Zahnstange umfassen, die mit der Steuerkurvenplatte (5) und der Gleitschiene (6) verbunden ist.

10. Vorrichtung nach einem der Ansprüche 1 bis 9, dadurch gekennzeichnet, daß die Steuereinrichtungen für die Lage der Grundplatte (4) bezüglich der Steuerkurvenplatte (5) für jede Steuerkurvenplatte einen Zylinder (13), der einerseits an der Steuerkurvenplatte und andererseits an der Grundplatte, vorzugsweise auf der Achse eines Rollelementes (31) oder eines Gleitelementes angelenkt ist, das an der Grundplatte angebracht ist, oder ein motorbetriebenes Rädergetriebe mit einer zugehörigen mechanischen Zahnstange umfassen, die mit der Steuerkurvenplatte und der Gleitschiene verbunden ist.

11. Vorrichtung nach Anspruch 1 bis 3, dadurch gekennzeichnet, daß die Steuerkurvenplatte (51) einen langgestreckten schrägverlaufenden Schlitz (52) aufweist, und in der Gleitschiene (54) ein schrägverlaufender langgestreckter Schlitz (55) dem Schlitz (52) in der Steuerkurvenplatte gegenüber ausgebildet ist und quer durch die beiden Schlitze (52, 55) eine Rolle (57) um die Achse (53) führt, an der eine Schwinge (59) angelenkt ist, deren gegenüberliegenden äußeren Enden ihrerseits an der Gleitschiene (54) und an der Steuerkurvenplatte (51) angelenkt sind, wobei die Rolle (57) gleichzeitig an der Steuerkurvenplatte über eine Stützbahn (65), die vom oberen Rand des Schlitzes (52) in der Steuerkurvenplatte (51) gebildet wird, und an der Gleitschiene (54) über eine stützbahn (66) abrollen kann, die vom unteren Rand des Schlitzes (55) der Gleitschiene gebildet wird, und der Befehl zum Schwenken der Schwinge (59) beispielsweise von einem Zylinder (67) kommt, der einerseits an der Gleitschiene (54) und andererseits an der Anlenkstelle der Schwinge (59) an der Steuerkurvenplatte (51) verankert ist.

12. Vorrichtung nach Anspruch 11, dadurch gekennzeichnet, daß in der Steuerkurvenplatte (58) und in der Gleitschiene (54) einander gegenüber zwei langgestreckte und schrägverlaufende Schlitze (81, 79) ausgebildet sind, durch die quer eine Rolle (52) führt, die sich auf einer fest mit der Steuerkurvenplatte verbundenen Achse (83) dreht, wobei die Anordnung der Rolle (82) und die Abmessung der Schlitze (81, 79) so gewählt sind, daß die Rolle auf einer ersten Gegenbahn (84), die vom unteren Rand des Schlitzes (81) der Steuerkurvenplatte (51) gebildet wird, und auf einer zweiten Gegenbahn (85) abrollt, die vom oberen Rand des Schlitzes (79) der Gleitschiene (54) gebildet wird.

13. Vorrichtung nach einem der Ansprüche 11 und 12, dadurch gekennzeichnet, daß die Enden der Schwinge (59) mit langgestreckten Öffnungen (63, 64) in gleicher Weise wie die Steuerkurvenplatte (51) und die Gleitschiene (54) mit entsprechenden Öffnungen perforiert sind, durch die quer Zapfen (61, 62) gehen, die in den Öffnungen gleiten können, wenn die Schwinge (59) um die Achse (58) ihrer Rolle (57) während der Einstellung der Höhe der Steuerkurvenplatte (51) bezüglich der Gleitschiene (54) schwenkt.

14. Vorrichtung nach einem der Ansprüche 11 bis 13, dadurch gekennzeichnet, daß die Schlitze (66, 79, 56) der Gleitschiene (54) in parallelen Seitenansätzen (54b, 78, 75) von Gabeln ausgespart sind, die am oberen Teil der Gleitschiene (54) ausgebildet sind, wobei die Steuerkurvenplatte (51) zwischen den beiden Seitenansätzen liegt und wie letztere von den Rollen (57, 73, 82) und ihren Achsen durchquert wird.

15. Vorrichtung nach einem der Ansprüche 1 bis 10, dadurch gekennzeichnet, daß die Steuerkurvenplatte (5) ein geformtes oder gestanztes Metallblech oder eine dünne Formplatte aus einem Kunststoffmaterial mit einerVerstärkung aus einem Metallgitter oder einem maschinell geschweißten Gitter ist.

FIG.1

FIG.8

FIG.3

FIG.2

EP 0 268 514 B1

EP 0 268 514 B1

FIG.4

FIG.5

FIG.6

FIG.7

# FIG.9

# FIG.10

EP 0 268 514 B1

FIG.11

FIG.12

EP 0 268 514 B1